# EUROPÄISCHE PATENTSCHRIFT

(11) **EP 0 935 076 B1**
(45) Veröffentlichungstag und Bekanntmachung des Hinweises auf die Patenterteilung: **09.04.2003**
(21) Anmeldenummer: 99102218.7
(22) Anmeldetag: 01.02.1999
(51) Int. Cl.: F16B 12/10, F16B 12/24, A47B 95/00

(54) **Befestigungsvorrichtung für die Befestigung mehrerer Möbelbeschläge an einem Möbelteil**
Fixing device for fixing a number of furniture fittings on a furniture element
Dispositif de fixation pour fixer plusieurs ferrures de meuble à un élément de meuble

(30) Priorität: 09.02.1998 AT 22598
(43) Veröffentlichungstag der Anmeldung: 11.08.1999
(73) Patentinhaber: Julius Blum Gesellschaft m.b.H., 6973 Höchst (AT)
(72) Erfinder: Röck, Erich, 6973 Höchst (AT); Hörger, Horst, 89567 Sontheim (DE)
(74) Vertreter: Torggler, Paul Norbert, Dr.

(56) Entgegenhaltungen:
- AT-B- 352 326
- GB-A- 1 434 130
- US-A- 4 671 481

## Beschreibung

Die Erfindung bezieht sich auf eine Befestigungsvorrichtung für die Befestigung mehrerer Möbelbeschläge an einem Möbelteil und gegebenenfalls für die zusätzliche Verankerung zweier oder mehrerer Möbelteile mit einer an einer Möbelseitenwand od. dgl. zu befestigenden Verankerungsschiene, die Öffnungen zur Aufnahme von Befestigungszapfen aufweist, die an den Beschlägen und/oder den Möbelteilen ausgebildet bzw. mit diesen verbunden sind.

Nach dem derzeitigen Stand der Technik werden die einzelnen Möbelbeschläge eines Schrankes einzeln mittels Dübeln od.dgl. befestigt. Beispiele dafür sind Grundplatten von Scharnieren, Möbelverbinder, Fachbodenhalter und dgl. Ebenso ist es bekannt, die Seitenwände eines Schrankes mittels spezieller Verbindungsbeschläge mit dem Unter- und Oberboden zu verbinden.

Aufgabe der Erfindung ist es, eine Befestigungsvorrichtung zu schaffen, mittels der der Zusammenbau eines Möbels wesentlich beschleunigt werden kann. Dabei sollen die Möbelbeschläge, beispielsweise Grundplatten von Scharnieren, nicht einzeln durch Spannen von Dübeln oder Einschrauben von Schrauben fixiert werden, sondern es soll möglich sein, sämtliche beim fertigen Schrank übereinander angeordnete Beschläge an einer Seite an der Möbelwand auf einen Grundkörper der Befestigungsvorrichtung zu positionieren und anschließend sämtliche Möbelbeschläge in einem einfachen Arbeitsgang zu fixieren.

Aus der AT-PS 352 326 ist es bekannt, die Möbelbeschläge mittels einer Schiene zu fixieren, die in eine Nut in der Möbelwand eingesetzt ist. Die Befestigung der Beschläge erfolgt jedoch einzeln, wobei beispielsweise bei der Grundplatte eines Scharnieres zwei Spreizoder Verriegelungselemente betätigt werden müssen.

Die US-PS 4,671,481 beschreibt einen Beschlag zur Befestigung einer Arbeitsplatte an einer Möbelwand, wobei ein mit Haken versehener Beschlagteil in eine an der Möbelwand befestigbare Schiene, die mehrere Schlitze aufweist, einhängbar ist. Die GB 14 34 130 A zeigt die Verankerung von Möbelseitenwänden an Stützen mittels eines leistenförmigen Beschlages, der Vorsprünge aufweist, die in Schlitze eines an der Möbelseitenwand ausgebildeten Pfostens einsetzbar sind. In beiden Fällen werden die Vorsprünge des einen Beschlages in die geschlitzte Schiene bzw. Pfosten eingesetzt und durch eine Relativverschiebung verankert, d. h. bei der Montage müssen die beiden Möbelteile bzw. der Beschlagteil zueinander versetzt werden. Derartige Beschläge sind dann nicht oder nur sehr schwer einsetzbar, wenn mittels ihnen mehrere Teile unter Umständen in verschiedenen Arbeitsgängen miteinander verbunden werden sollen.

Die erfindungsgemäße Aufgabe wird durch mindestens eine zu dieser Verankerungsschiene komplementären Verriegelungsschiene, die relativ zur Verankerungsschiene, vorteilhaft in dieser geführt, verschiebbar ist und die Randabschnitte aufweist, die in der Arretierstellung hinter Vorsprüngen der Befestigungszapfen einrasten, gelöst.

Vorteilhaft ist vorgesehen, daß die Verriegelungsschiene in der Längsrichtung der Verankerungsschiene verschiebbar ist und daß beide Schienen in etwa gleich lang sind. Das Verschieben der Verriegelungsschiene erfolgt vorteilhaft durch einen Exzenter, der in der Verankerungsschiene gelagert ist.

Vorteilhaft ist die Verriegelungsschiene mit schlüssellochförmigen Löchern versehen.

Sind die Beschläge auf der Verankerungsschiene positioniert, ragen deren Befestigungszapfen durch die weiteren Bereiche der schlüssellochförmigen Löcher der Verriegelungsschiene. Wird die Verriegelungsschiene durch einmaliges Verdrehen des Exzenters relativ zur Verankerungsschiene verschoben, werden die Befestigungszapfen im schmäleren Teil der schlüssellochförmigen Löcher aufgenommen und durch die Randabschnitte der Verankerungsschiene fixiert. Somit erfolgt die Fixierung sämtlicher Beschläge einer Reihe einer Möbelseitenwand durch ein einmaliges Verdrehen des Exzenters. Es können dabei sowohl die Grundplatten der Scharniere, Möbelverbinder, die die Seitenwand mit dem Ober- und dem Unterboden verbinden, als auch Fachbretthalter u. dgl. fixiert werden.

Nachfolgend werden verschiedene Ausführungsbeispiele der Erfindung anhand der Figuren der beiliegenden Zeichnungen beschrieben.

Es zeigen:
- Fig. 1: ein schematisch gehaltenes Schaubild eines schrankförmigen Möbels, das mit erfindungsgemäßen Befestigungsvorrichtungen versehen ist;

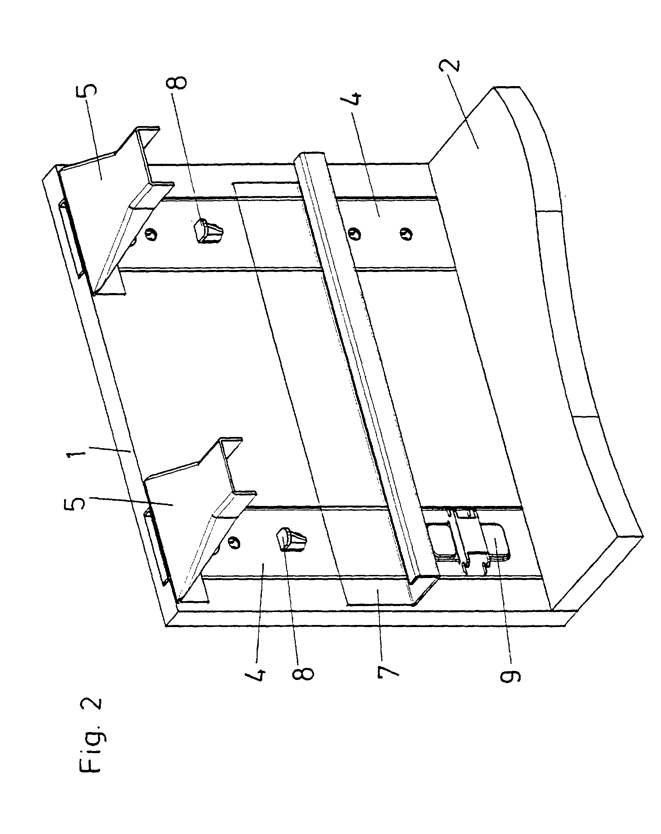

- Fig.2: schaubildlich und schematisch eine Möbelseitenwand mit erfindungsgemäßen Befestigungsvorrichtungen und Beschlägen;

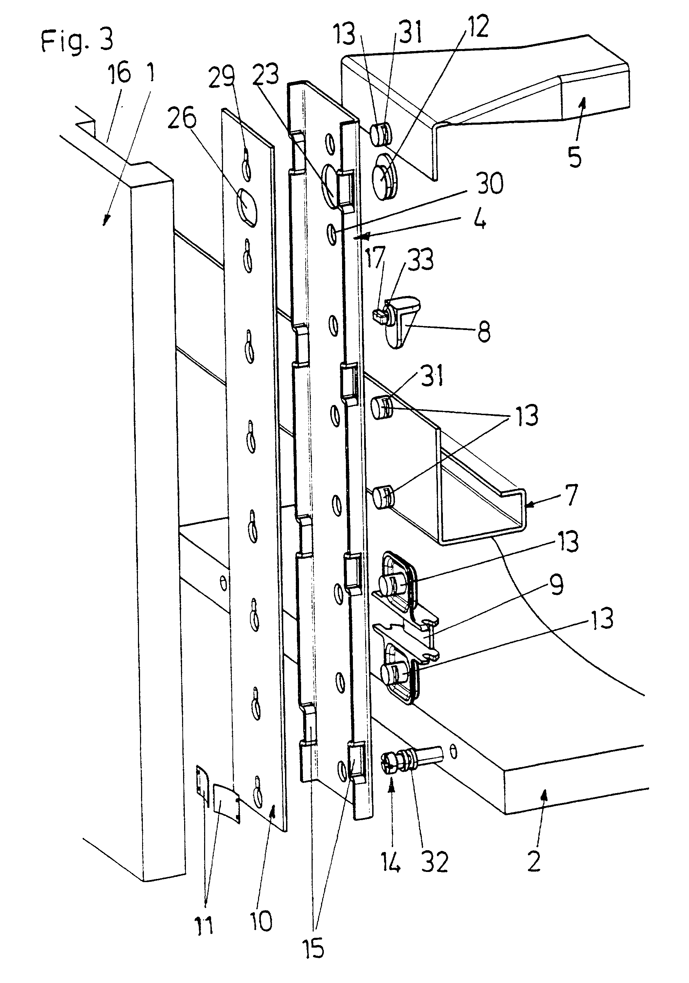

- Fig. 3: schaubildlich und auseinandergezogen eine Befestigungsvorrichtung mit einem Teil der Möbelseitenwand und den zu befestigenden Beschlägen;

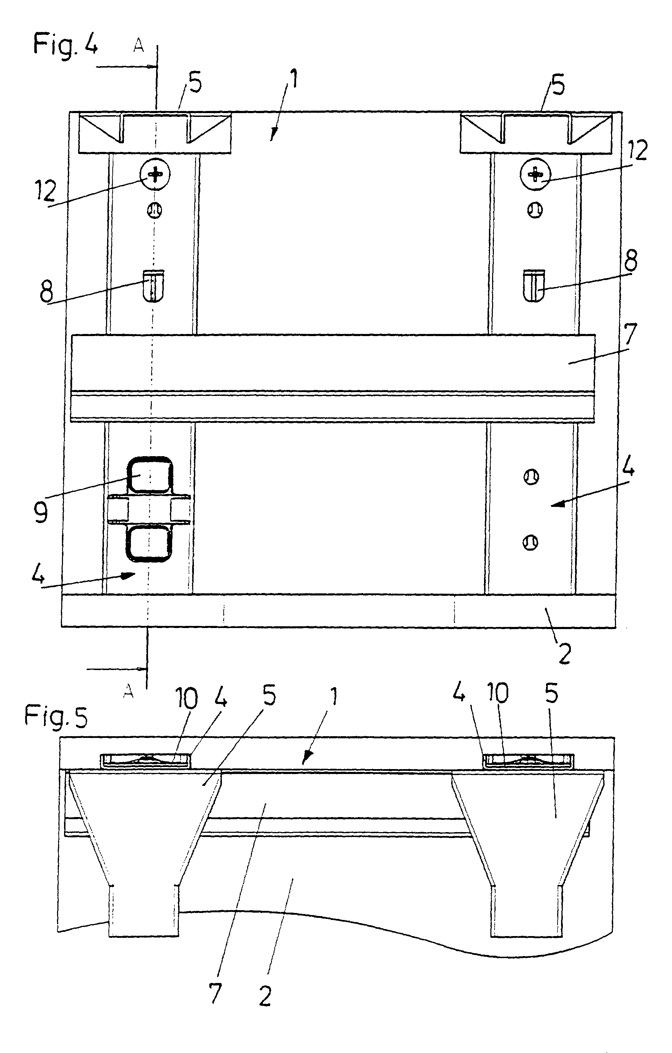

- Fig. 4: einen Aufriß einer Seitenwand mit erfindungsgemäßen Befestigungsvorrichtungen;
- Fig. 5: eine Draufsicht auf eine Seitenwand mit erfindungsgemäßen Befestigungsvorrichtungen;

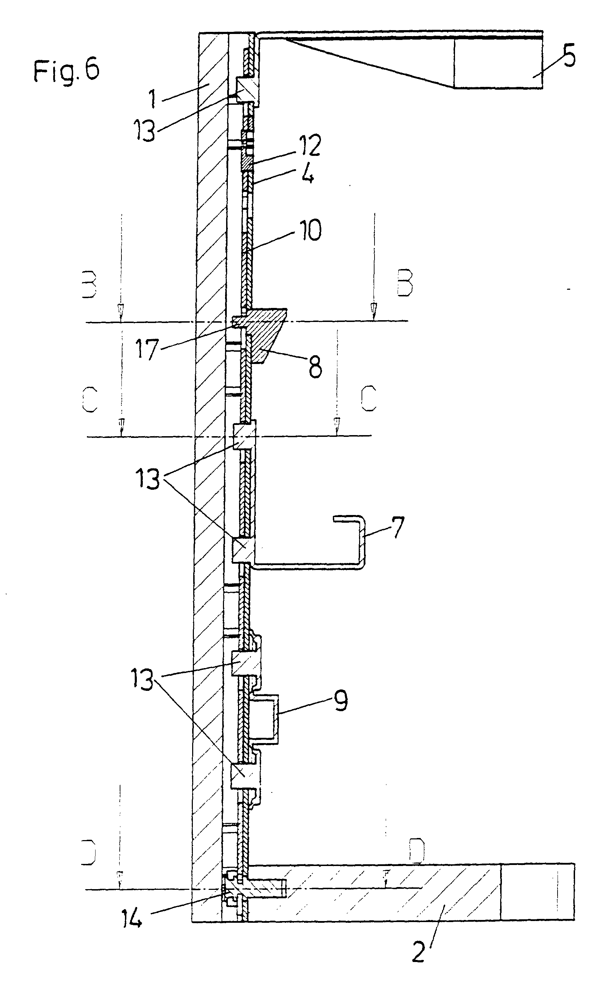

- Fig. 6: einen Schnitt nach der Linie A-A der Fig. 4;

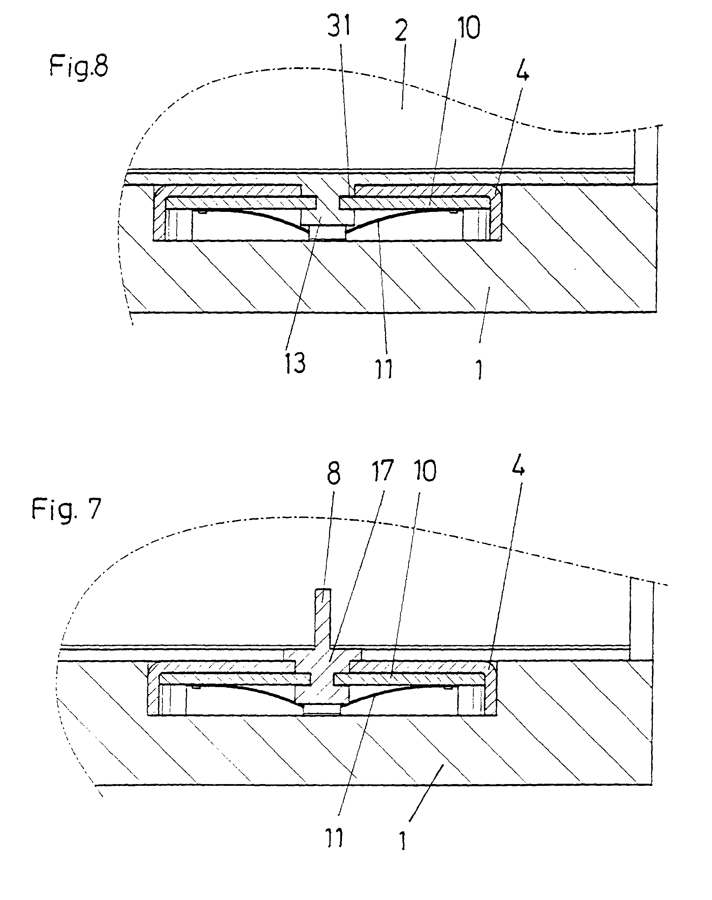

- Fig. 7: einen Schnitt nach der Linie B-B der Fig. 6;
- Fig. 8: einen Schnitt nach der Linie C-C der Fig. 6;

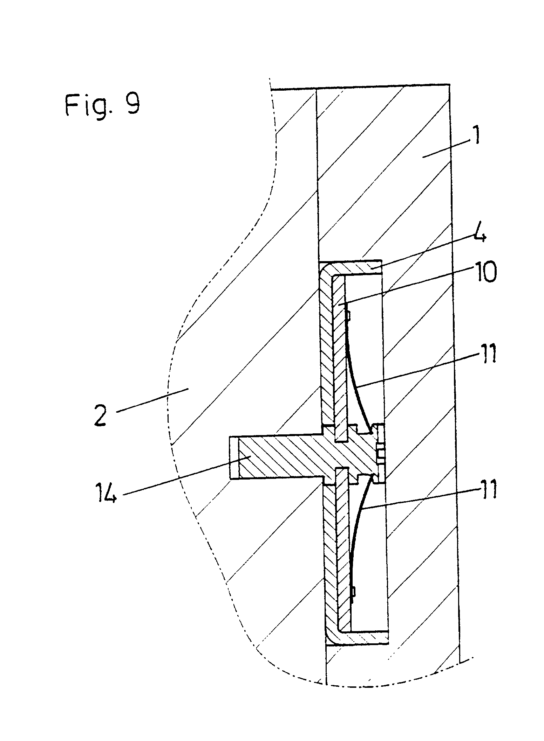

- Fig. 9: einen Schnitt nach der Linie D-D der Fig. 6;
- Fig.10: ein Schaubild einer Möbelseitenwand mit erfindungsgemäßen Befestigungsvorrichtungen gemäß einem weiteren Ausführungsbeispiel der Erfindung sowie mit den daran gehaltenen Beschlägen;
- Fig.11: dieselbe Ansicht wie Fig. 10, wobei die einzelnen Teile jedoch auseinandergezogen gezeichnet sind;
- Fig.12: einen Horizontalschnitt durch eine Möbelwand und die erfindungsgemäßen Befestigungsvorrichtungen gemäß der Fig. 10;

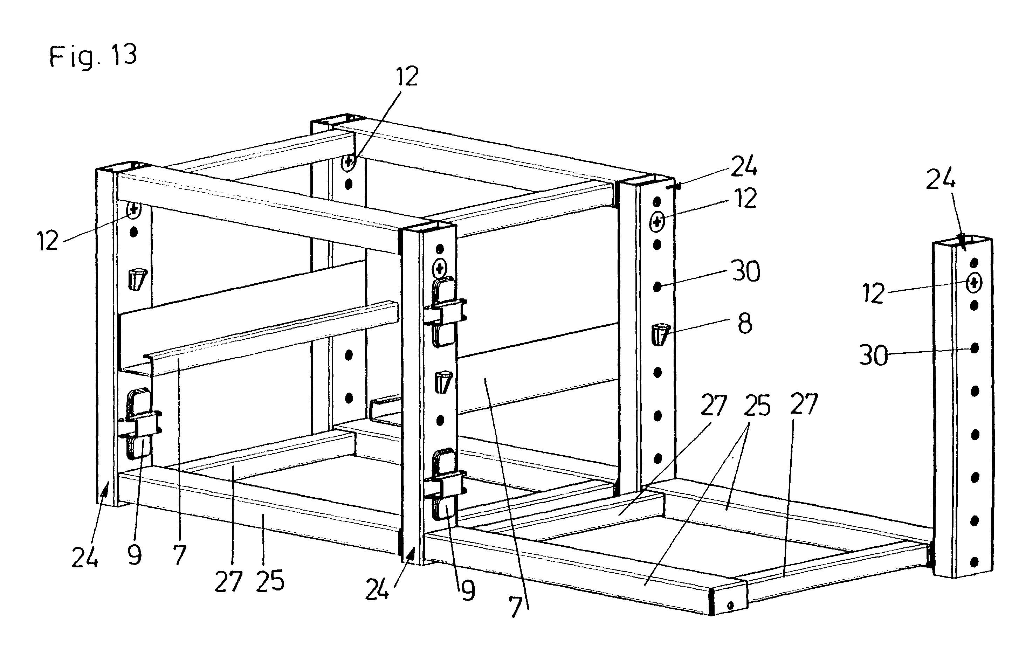

- Fig.13: ein Schaubild eines mittels der erfindungsgemäßen Befestigungsvorrichtungen erstellten Rahmenwerkes für ein schrankförmiges Möbel;
- Fig.14: schaubildlich ein weiteres Ausführungsbeispiel der erfindungsgemäßen Befestigungsvorrichtung;
- Fig.15: einen Horizontalschnitt durch eine Befestigungsvorrichtung gemäß der Fig. 14 und
- Fig.16: einen Vertikalschnitt durch eine Befestigungsvorrichtung gemäß dem Ausführungsbeispiel der Fig. 14.

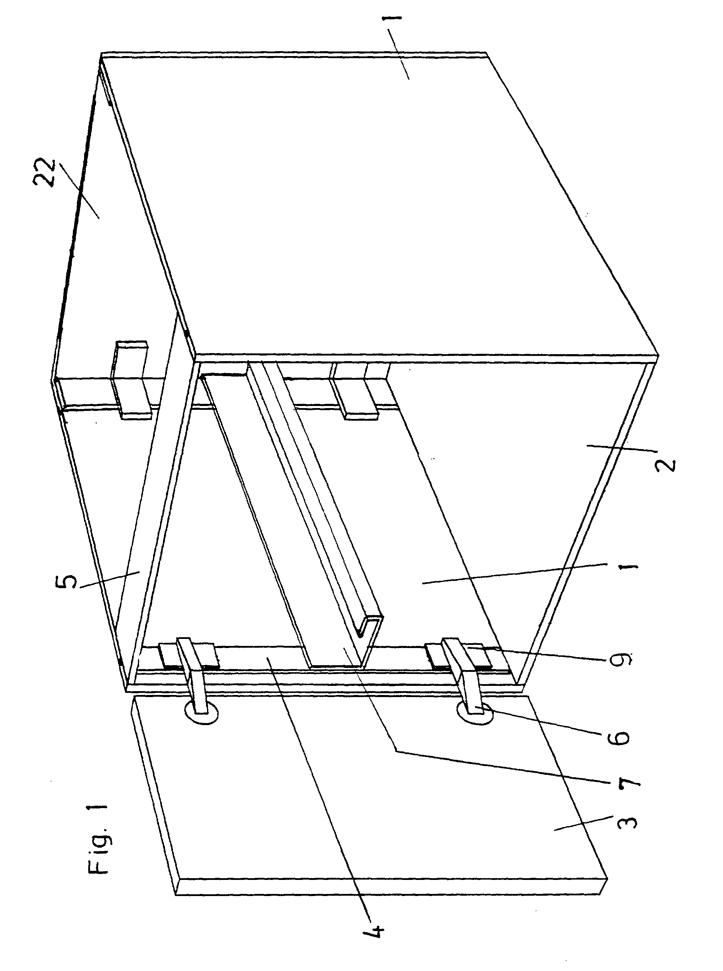

Das in der Fig. 1 gezeigte kastenförmige Möbel weist Seitenwände 1 auf, die mittels erfindungsgemäßer Befestigungsvorrichtung mit dem Boden 2, Querträgern 5, einer Rückwand 22 und über Scharniere 6 mit der Möbeltüre 3 verbunden sind.

Die Seitenwände 1 weisen an der Innenseite vorne und hinten vertikale Nuten 16 auf, in der die Verankerungsschienen 4, 10 der Befestigungsvorrichtung aufgenommen sind. Jede Befestigungsvorrichtung weist eine Verankerungsschiene 4 mit U-Profil auf sowie eine flache Verriegelungsschiene 10, die im Profil der Verankerungsschiene 4 geführt ist.

Die Verankerungsschiene 4 ist an ihren Seitenstegen mit nach innen gerichteten Ausbuchtungen 15 versehen, die eine Führung für die Verriegelungsschiene 10 bilden.

Ferner weist die Verankerungsschiene 4 Löcher 30 auf, die den Durchtritt der Befestigungszapfen 13, 14, 17 ermöglichen.

Die Verriegelungsschiene 10 ist mit korrespondierenden Löchern 29 versehen, die schlüssellochförmig ausgeführt sind. Die Befestigungszapfen 13, die an den Querträgern 5, den Tragschienen 7 einer Schubladenführungsgarnitur oder der Grundplatten 9 der Scharniere 6 angeordnet sind, werden ebenso wie die Befestigungszapfen 17 des Fachbodenträgers 8 oder die als Möbelverbinder ausgebildeten Befestigungszapfen 14, die in den Unterboden 2 eingeschraubt oder eingedübelt sind, durch die Löcher 30 und die breiteren Bereiche der schlüssellochförmigen Löcher 29 gesteckt. Wenn sämtliche Beschläge montiert sind, wird die Verriegelungsschiene 10 mittels des Exzenters 12, der in einem Loch 23 der Verankerungsschiene 4 aufgenommen ist und in ein horizontales Langloch 26 der Verriegelungsschiene 10 ragt, relativ zur Verankerungsschiene 4 vertikal verschoben. Dadurch gelangen die Befestigungszapfen 13, 14, 17 in den schmäleren Bereich der schlüssellochförmigen Löcher 29, wobei die Randbereiche der Löcher 29 bzw. der Verriegelungsschiene 10 in den Nuten 31 bzw. in der Hinterschneidung 32, 33 der Befestigungszapfen 13, 14, 17 einrasten.

Sämtliche Beschläge 7, 8, 9 sowie die Querträger 5 und der Unterboden 2 sind damit durch einen Arbeitsgang an den Schienen 4, 10 arretiert.

Im Ausführungsbeispiel sind noch Blattfedern 11 vorgesehen, die an der Verriegelungsschiene 10 befestigt sind. Im gezeigten Ausführungsbeispiel sind die Nuten 31 an den Befestigungszapfen 13 seitlich angeordnet und der Befestigungszapfen 14 weist eine Ringnut 32 auf. Der Befestigungszapfen 17 ist hammerförmig ausgebildet, wobei die Verriegelungsschiene 10 mit dem Rand eines schlüssellochförmigen Loches 29 in der Hinterschneidung 33 einrastet, die vom Kopf und dem Hals des Befestigungszapfens 17 abgegrenzt wird.

Die Blattfedern 11 sind mit der Verriegelungsschiene 10 vernietet und greifen am Kopf des Befestigungszapfens 14 an, wodurch der Befestigungszapfen 14 in das Profil der Verankerungsschiene 4 hineingezogen und die Seitenwand 1 an den Boden 2 gedrückt wird.

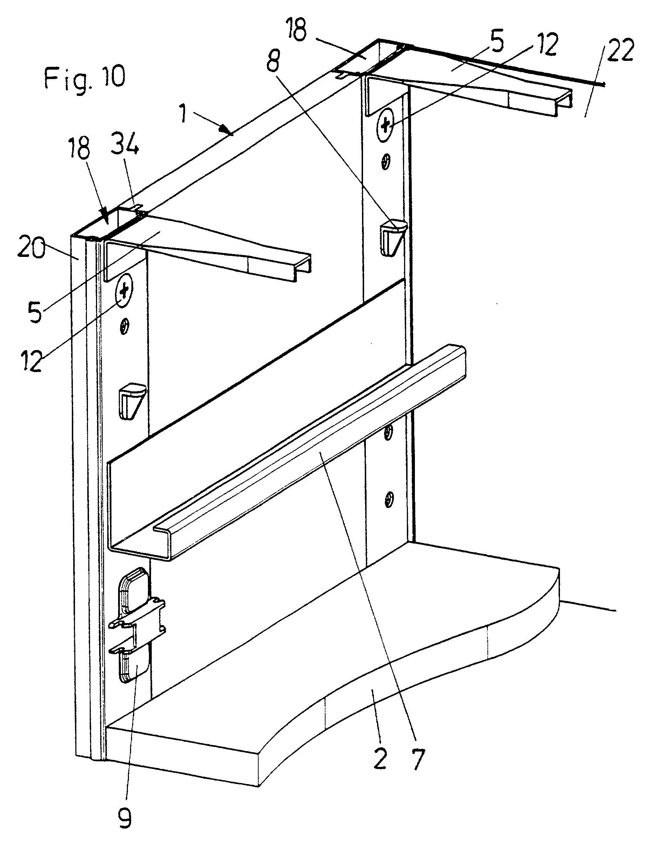

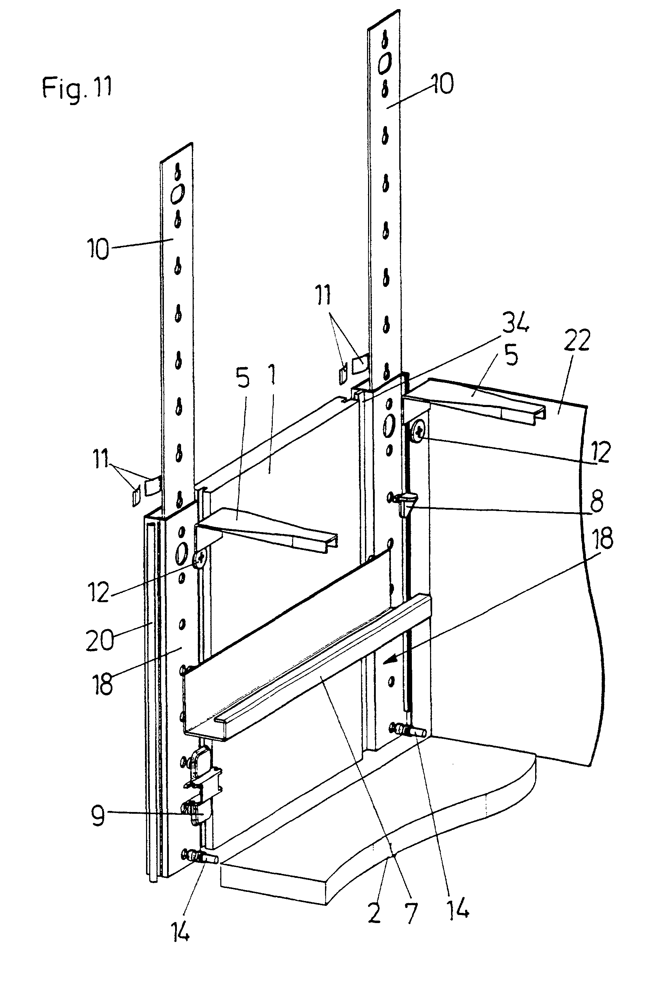

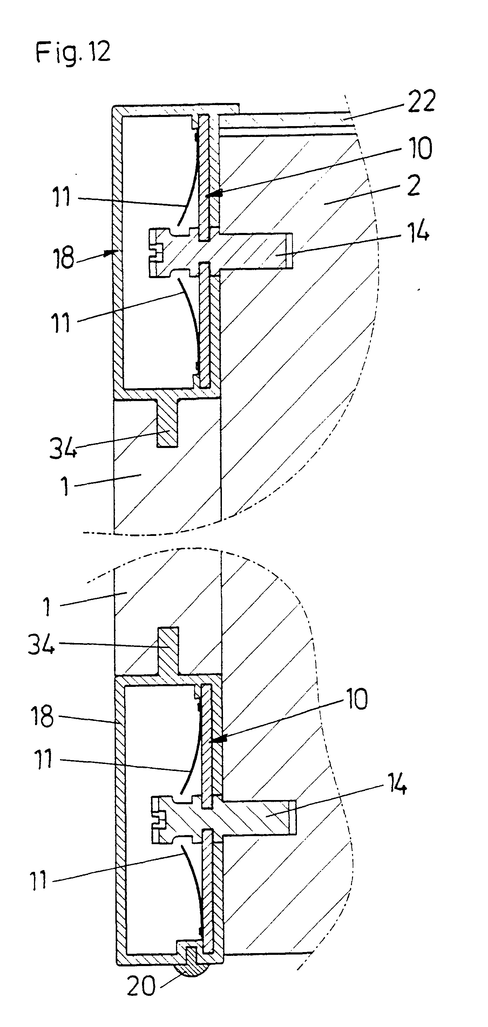

Im Ausführungsbeispiel nach den Fig. 10 bis 12 sind die Verankerungsschienen 18 mit Kastenprofilen mit rechteckigem Querschnitt ausgeführt. Jede Verankerungsschiene 18 weist einen seitlich herausragenden Steg 34 auf, der in eine komplementäre Nut an der Stirnseite der Möbelseitenwand 1 ragt. Auf diese Art ist die Verankerungsschiene 18 an der Seitenwand 1 verankert. Der Steg 34 kann vorzugsweise ein Tannenzapfenprofil aufweisen, um einen besseren Halt in der Nut der Möbelseitenwand 1 zu bewirken. Die Möbelseitenwand 1 ist vorzugsweise aus einem Holzmaterial, beispielsweise als Spanplatte, gefertigt.

Im Gegensatz zum zuvor beschriebenen Ausführungsbeispiel, in dem die Befestigungsvorrichtungen gewissermaßen in die Möbelseitenwand 1 eingesetzt sind, sind die Verankerungsschienen 8 im Ausführungsbeispiel nach den Fig. 10 bis 12 an die Möbelseitenwand 1 angesetzt und vergrößern daher die Tiefe der Gesamtseitenwand des kastenförmigen Möbels.

Die vordere Verankerungsschiene 18 weist an ihrer zur Türe 3 gerichteten Seite ein Dämpfungsprofil 20 aus Kunststoff oder Gummi auf, an dem die Türe 3 im geschlossenen Zustand anliegt.

Die Verriegelungsschiene 10 ist gleich wie im vorher beschriebenen Ausführungsbeispiel ausgeführt und wird wiederum über einen Exzenter 12 betätigt, der in einem Loch 23 der Verankerungsschiene 18 aufgenommen ist. Ebenso sind die Befestigungszapfen 13, 14, 17 der Beschläge bzw. Querträger 5 oder des Bodens 2 gleich ausgeführt, sodaß beide Systeme (Verankerungsschiene 4 oder Verankerungsschiene 18) jederzeit leicht ausgewechselt werden können.

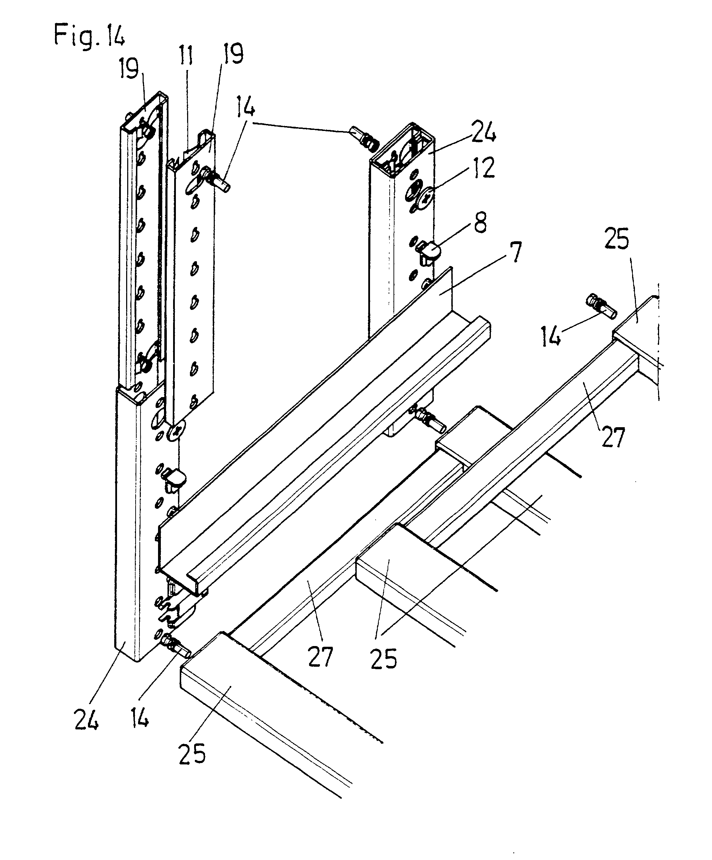

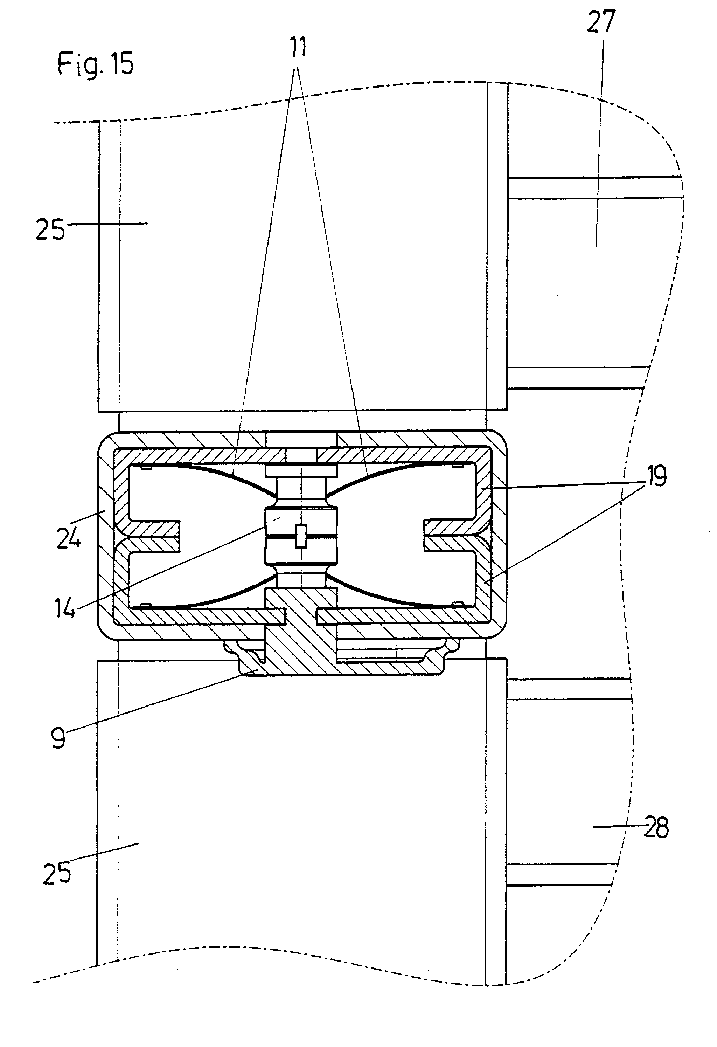

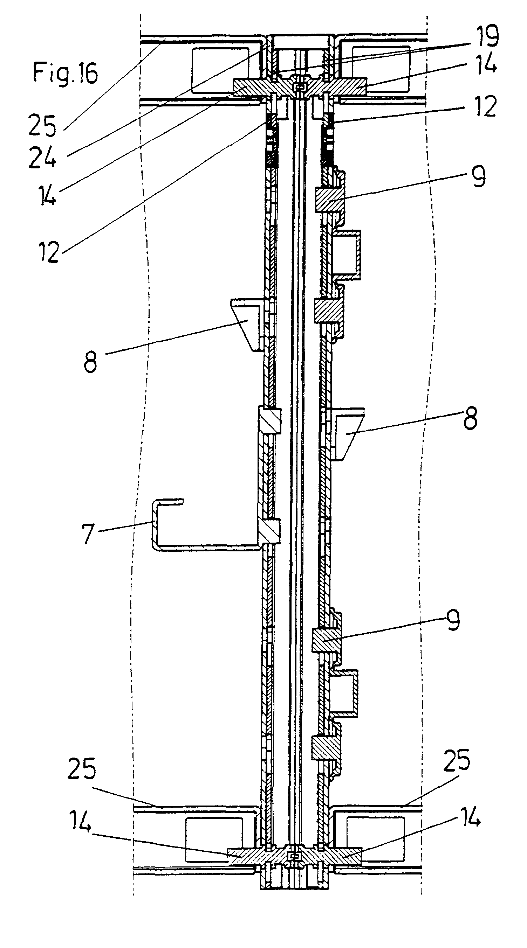

Im Ausführungsbeispiel nach den Fig. 14 bis 16 sind die Verankerungsschienen 24 wiederum mit rechteckigem Kastenprofil ausgeführt.

Im gezeigten Ausführungsbeispiel bilden die Verankerungsschienen 24 zusammen mit horizontalen Querprofilen 25, 27 ein Rahmenwerk. Sie könnten jedoch auch seitliche Stege 34, wie im zuvor beschriebenen Ausführungsbeispiel, oder andere Verankerungsmittel aufweisen, um mit einer Möbelseitenwand 1 verbunden zu werden.

In die Verankerungsschienen 24 sind zwei Verriegelungsschienen 19 eingesetzt. Die Verriegelungsschienen 19 weisen jeweils C-Profil auf, wobei die Seitenstege zueinander gerichtet sind. D.h. die Mittelstege der Verriegelungsschienen 19, in denen die schlüssellochförmigen Löcher 29 ausgebildet sind, der Verriegelungsschienen 19 liegen an den breiteren Stegen der Verankerungsschienen 24 an, die die Löcher 30 für die Befestigungszapfen 13, 14, 17 aufweisen.

Es können sowohl somit Beschläge 7, 9 als auch Querträger 25, 27 an zwei Seiten der Verankerungsschienen 24 befestigt werden, sodaß sich diese Verankerungsschienen 24 besonders für die Ausgestaltung von Zwischenwänden eignen.

Die vertikale Verschiebung der Verankerungsschiene 19 erfolgt wieder über den Exzenter 12, wobei in jeder Verankerungsschiene 24 zwei Exzenter 12 an zwei einander gegenüberliegenden Seiten vorgesehen sind.

Die C-förmigen Verriegelungsschienen 19 sind wiederum mit Blattfedern 11 versehen (vorteilhaft sind die Blattfedern 11 mit den Verriegelungsschienen 19 vernietet), die auf die Köpfe der Befestigungszapfen 14 für die Querträger 25 drücken und so die Querträger 25 und die Verankerungsschienen 24 zusammenziehen. Damit ist gewährleistet, daß bei Betätigung der Exzenter 12 die Verriegelungsschienen 19 jeweils in der Ringnut 32 der Befestigungszapfen 14 einrasten.

Ebenso wie sämtliche Beschläge 7, 6, 9 oder Verbindungsteile durch ein einmaliges Verdrehen des Exzenters 12 verriegelt werden, werden sie auch durch ein Verdrehen des Exzenters 12 in der Gegenrichtung gleichzeitig gelöst, sodaß es sehr leicht ist, Beschläge u. dgl. auszutauschen.

## Patentansprüche

1. Befestigungsvorrichtung für die Befestigung mehrerer Möbelbeschläge an einem Möbelteil und gegebenenfalls für die zusätzliche Verankerung zweier oder mehrerer Möbelteile mit einer an einer Möbelseitenwand od. dgl. zu befestigenden Verankerungsschiene, die Öffnungen zur Aufnahme von Befestigungszapfen aufweist, die an den Beschlägen und/oder den Möbelteilen ausgebildet bzw. mit diesen verbunden sind, **gekennzeichnet durch** mindestens eine zu dieser Verankerungsschiene (4, 18, 24) komplementären Verriegelungsschiene (10, 19), die relativ zur Verankerungsschiene (4, 18, 24), vorteilhaft in dieser geführt, verschiebbar ist und die Randabschnitte aufweist, die in der Arretierstellung hinter Vorsprüngen der Befestigungszapfen (13, 14, 17) einrasten.

2. Befestigungsvorrichtung nach Anspruch 1, **dadurch gekennzeichnet, daß** die Randabschnitte der Verriegelungsschiene (10, 19) in Nuten (31, 32) in den Befestigungszapfen (13, 14, 17) einrasten.

3. Befestigungsvorrichtung nach Anspruch 1 oder 2, **dadurch gekennzeichnet, daß** die Verriegelungsschiene (10, 19) in der Längsrichtung der Verankerungsschiene (4, 18, 24) verschiebbar ist.

4. Befestigungsvorrichtung nach Anspruch 3, **dadurch gekennzeichnet, daß** beide Schienen (4, 10, 18, 19, 24) etwa gleich lang sind.

5. Befestigungsvorrichtung nach einem der Ansprüche 1 bis 4, **dadurch gekennzeichnet, daß** die Verriegelungsschiene ( 10, 19) mit schlüssellochförmigen Löchern (29) versehen ist.

6. Befestigungsvorrichtung nach Anspruch 5, **dadurch gekennzeichnet, daß** die schlüssellochförmigen Löcher (29) in einer Reihe angeordnet sind.

7. Befestigungsvorrichtung nach einem der Ansprüche 1 bis 6, **dadurch gekennzeichnet, daß** die Verankerungsschiene (4) U-Profil aufweist.

8. Befestigungsvorrichtung nach einem der Ansprüche 1 bis 6, **dadurch gekennzeichnet, daß** die Verankerungsschiene (18, 24) Kastenprofil aufweist.

9. Befestigungsvorrichtung nach Anspruch 7 oder 8, **dadurch gekennzeichnet, daß** die Verriegelungsschiene (10, 19) im Profil der Verankerungsschiene (4, 18, 24) aufgenommen ist.

10. Befestigungsvorrichtung nach einem der Ansprüche 1 bis 9, **dadurch gekennzeichnet, daß** die Verriegelungsschiene (10, 19) über einen Exzenter (12) bewegbar ist, der in der Verankerungsschiene (4, 18, 24) lagert.

11. Befestigungsvorrichtung nach einem der Ansprüche 7 bis 10, **dadurch gekennzeichnet, daß** an den Seitenstegen der Verankerungsschiene (4) nach innen gerichtete Ausbuchtungen (15) vorgesehen sind, die als Führungen für die Verriegelungsschiene (10) dienen.

12. Befestigungsvorrichtung nach Anspruch 2, **dadurch gekennzeichnet, daß** die Nuten (31) in den Befestigungszapfen (13) seitlich angeordnet sind.

13. Befestigungsvorrichtung nach einem der Ansprüche 1 bis 12, **dadurch gekennzeichnet, daß** die Verriegelungsschiene (10, 19) mit Federn (11) versehen ist, die an mindestens einen Befestigungsbolzen (14) angreifen.

14. Befestigungsvorrichtung nach einem der Ansprüche 1 bis 13, **dadurch gekennzeichnet, daß** an zumindest einem Ende der Verankerungsschiene (4, 18, 24) in diese eine Querstrebe (5) eingehängt ist, die an diesem gegenüberliegenden Ende mit einer weiteren Verankerungsschiene (4, 18, 24) verbunden ist.

15. Befestigungsvorrichtung nach Anspruch 7 oder 8, **dadurch gekennzeichnet, daß** die Verankerungsschiene (18) an einem Seitensteg einen in eine Nut einer Möbelseitenwand (1) einsetzbaren Befestigungssteg (34) aufweist.

16. Befestigungsvorrichtung nach einem der Ansprüche 7, 8 oder 15, **dadurch gekennzeichnet, daß** in einem der Seitenstege der Verankerungsschiene (18) ein Dämpfungsprofil (20), beispielsweise aus Kunststoff oder Gummi verankert ist.

17. Befestigungsvorrichtung nach einem der Ansprüche 1 bis 16, **dadurch gekennzeichnet, daß** die Verriegelungsschiene (19) C-Profil aufweist.

18. Befestigungsvorrichtung nach mindestens einem der Ansprüche 1 bis 17, **dadurch gekennzeichnet, daß** im Profil einer Verankerungsschiene (24) zwei Verriegelungsschienen (19) aufgenommen sind.

19. Befestigungsvorrichtung nach den Ansprüchen 8, 17 und 18, **dadurch gekennzeichnet, daß** im Profil der Verankerungsschiene (24) zwei Verriegelungsschienen (19) mit C-Profil und mit zueinander gerichteten Seitenstegen angeordnet sind.

## Claims

1. A fastening device for the fastening of a plurality of furniture fittings to a furniture part and, where appropriate, for the additional anchoring of two or more furniture parts to an anchoring rail which is to be fastened to a side wall or the like of a piece of furniture and has openings for receiving fastening pins constructed on the fittings and/or the furniture parts or connected thereto, **characterised by** at least one locking rail (10, 19) which is complementary to said anchoring rail (4, 18, 24) and is displaceable relative to the anchoring rail (4, 18, 24) while advantageously being guided therein and which has edge portions which latch in behind projections of the fastening pins (13, 14, 17) in the locking position.

2. A fastening device according to claim 1 **characterised in that** the edge portions of the locking rail (10, 19) latch into grooves (31, 32) in the fastening pins (13, 14, 17).

3. A fastening device according to claim 1 or 2 **characterised in that** the locking rail (10, 19) is displaceable in the longitudinal direction of the anchoring rail (4, 18, 24).

4. A fastening device according to claim 3 **characterised in that** both rails (4, 10, 18, 19, 24) are of approximately equal length.

5. A fastening device according to one of claims 1 to 4 **characterised in that** the locking rail (10, 19) is provided with keyhole-shaped holes (29).

6. A fastening device according to claim 5 **characterised in that** the keyhole-shaped holes (29) are arranged in a row.

7. A fastening device according to one of claims 1 to 6 **characterised in that** the anchoring rail (4) has a U profile.

8. A fastening device according to one of claims 1 to 6 **characterised in that** the anchoring rail (18, 24) has a box profile.

9. A fastening device according to claim 7 or 8 **characterised in that** the locking rail (10, 19) is received in the profile of the anchoring rail (4, 18, 24).

10. A fastening device according to one of claims 1 to 9 **characterised in that** the locking rail (10, 19) is movable by way of an eccentric (12) mounted in the anchoring rail (4, 18, 24).

11. A fastening device according to one of claims 7 to 10 **characterised in that** inwardly directed indentations (15) which serve as guides for the locking rail (10) are provided on the lateral webs of the anchoring rail (4).

12. A fastening device according to claim 2 **characterised in that** the grooves (31) in the fastening pins (13) are arranged laterally.

13. A fastening device according to one of claims 1 to 12 **characterised in that** the locking rail (10, 19) is provided with springs (11) which engage on at least one fastening bolt (14).

14. A fastening device according to one of claims 1 to 13 **characterised in that** a cross strut (5) is hung onto the anchoring rail (4, 18, 24) at least one end thereof and is connected at this opposite end to a further anchoring rail (4, 18, 24).

15. A fastening device according to claim 7 or 8, **characterised in that** the anchoring rail (18) has at a lateral web a fastening web (34) which is insertable into a groove of a side wall (1) of the piece of furniture.

16. A fastening device according to claims 7, 8 or 15 **characterised in that** a damping profile (20), made, for example, of plastic or rubber, is anchored in one of the lateral webs of the anchoring rail (18).

17. A fastening device according to one of claims 1 to 16 **characterised in that** the locking rail (19) has a C profile.

18. A fastening device according to at least one of claims 1 to 17 **characterised in that** two locking rails (19) are received in the profile of an anchoring rail (24).

19. A fastening device according to claims 8, 17 and 18 **characterised in that** two locking rails (19) with a C profile and with lateral webs directed toward each other are arranged in the profile of the anchoring rail (24).

## Revendications

1. Dispositif de fixation pour la fixation de plusieurs ferrures de meuble contre un élément d'un meuble et, le cas échant, pour un ancrage supplémentaire de deux ou plusieurs éléments de meuble avec un rail d'ancrage à fixer contre une paroi latérale ou un élément similaire d'un meuble, qui comprend des orifices destinés à recevoir des tétons de fixation qui sont formés contre les ferrures et/ou les éléments de meuble ou sont assemblés avec ceux-ci, **caractérisé par** au moins un rail de blocage (10, 19) complémentaire à ce rail d'ancrage (4, 18, 24), lequel est mobile par rapport au rail d'ancrage (4, 18, 24), de manière avantageuse en étant guidé dans celui-ci, et lequel comporte des parties de bordure qui, dans la position de blocage, se bloquent derrière des saillies des tétons de fixation (13, 14, 17).

2. Dispositif de fixation selon la revendication 1, **caractérisé en ce que** les parties de bordure du rail de blocage (10, 19) se bloquent dans des rainures (31, 32) réalisées dans les tétons de fixation (13, 14, 17).

3. Dispositif de fixation selon la revendication 1 ou 2, **caractérisé en ce que** le rail de blocage (10, 19) est mobile dans le sens longitudinal du rail d'ancrage (4, 18, 24).

4. Dispositif de fixation selon la revendication 3, **caractérisé en ce que** les deux rails (4, 10, 18, 19, 24) ont pratiquement la même longueur.

5. Dispositif de fixation selon une des revendications 1 à 4, **caractérisé en ce que** le rail de blocage (10, 19) comporte des trous (29) en forme de trous de serrure.

6. Dispositif de fixation selon la revendication 5, **caractérisé en ce que** les trous (29) en forme de trous de serrure sont disposés sur une rangée.

7. Dispositif de fixation selon une des revendications 1 à 6, **caractérisé en ce que** le rail d'ancrage (4) a un profil en U.

8. Dispositif de fixation selon une des revendications 1 à 6, **caractérisé en ce que** le rail d'ancrage (18, 24) a un profil rectangulaire.

9. Dispositif de fixation selon la revendication 7 ou 8, **caractérisé en ce que** le rail de blocage (10, 19) est logé dans le profil du rail d'ancrage (4, 18, 24).

10. Dispositif de fixation selon une des revendications 1 à 9, **caractérisé en ce que** le rail de blocage (10, 19) peut se déplacer par l'intermédiaire d'un excentrique (12), qui est logé dans le rail d'ancrage (4, 18, 24).

11. Dispositif de fixation selon une des revendications 7 à 10, **caractérisé en ce qu'**il est prévu sur les branches latérales du rail d'ancrage (4) des creux (15) orientés vers l'intérieur, qui forment des guidages pour le rail de blocage (10).

12. Dispositif de fixation selon la revendication 2, **caractérisé en ce que** les rainures (31) dans les tétons de fixation (13) sont réalisées sur le côté.

13. Dispositif de fixation selon une des revendications 1 à 12, **caractérisé en ce que** le rail de blocage (10, 19) comporte des ressorts (11), qui entrent en prise avec au moins un boulon de fixation (14).

14. Dispositif de fixation selon une des revendications 1 à 13, **caractérisé en ce que**, sur au moins une extrémité du rail d'ancrage (4, 18, 24), une traverse (5) est accrochée contre celui-ci, laquelle est assemblée sur une extrémité opposée à celle-ci avec un autre rail d'ancrage (4, 18, 24).

15. Dispositif de fixation selon la revendication 7 ou 8, **caractérisé en ce que** le rail d'ancrage (18) est muni, sur une branche latérale, d'une ailette de fixation (34) pouvant être insérée dans une rainure d'une paroi latérale (1) d'un meuble.

16. Dispositif de fixation selon la revendication 7, 8 ou 15, **caractérisé en ce que** dans l'une des branches latérales du rail d'ancrage (18) est ancré un profilé d'amortissement (20) en matière plastique ou en caoutchouc, par exemple.

17. Dispositif de fixation selon une des revendications 1 à 16, **caractérisé en ce que** le rail de blocage (19) a un profil en C.

18. Dispositif de fixation selon au moins une des revendications 1 à 17, **caractérisé en ce que** deux rails de blocage (19) sont logés dans le profil d'un rail d'ancrage (24).

19. Dispositif de fixation selon les revendications 8, 17 et 18, **caractérisé en ce que** deux rails de blocage (19) avec un profil en C et avec des branches latérales orientées l'une vers l'autre sont disposés dans le profil du rail d'ancrage (24).
